# EUROPÄISCHE PATENTSCHRIFT

(11) **EP 1 401 650 B1**
(45) Veröffentlichungstag und Bekanntmachung des Hinweises auf die Patenterteilung: **25.10.2006**
(21) Anmeldenummer: 02745057.6
(22) Anmeldetag: 16.05.2002
(51) Int. Cl.: B32B 21/08

(54) **VERFAHREN UND VORRICHTUNG ZUR HERSTELLUNG VON FURNIEREN UND VON FURNIERTEN TEILEN SOWIE FURNIERE UND FURNIERTE TEILE**
METHOD AND DEVICE FOR PRODUCING VENEER AND VENEERED PARTS AND VENEER AND VENEERED PARTS
PROCEDE ET DISPOSITIF DE FABRICATION DE CONTREPLAQUES ET D'ELEMENTS CONTREPLAQUES ET CONTREPLAQUES ET ELEMENTS CONTREPLAQUES

(30) Priorität: 18.05.2001 DE 10124688
(43) Veröffentlichungstag der Anmeldung: 31.03.2004
(73) Patentinhaber: Klebchemie M.G. Becker GmbH & Co. KG, 76356 Weingarten/Baden (DE)
(72) Erfinder: BECKER-WEIMANN, Klaus, 76227 Karlsruhe (DE); BÜKER, Oliver, 76131 Karlsruhe (DE)
(74) Vertreter: Isenbruck, Günter
(86) Internationale Anmeldenummer: PCT/DE2002/001772
(87) Internationale Veröffentlichungsnummer: WO 2002/094549

(56) Entgegenhaltungen:
- EP-A- 0 699 545
- WO-A-95/01869
- DE-A- 19 543 901

## Beschreibung

Die Erfindung bezieht sich auf ein Verfahren und eine Vorrichtung zur Herstellung von Furnieren und von furnierten Teilen sowie Furniere und furnierte Teile.

Furniere werden in großem Maße in der Möbel- und holzverarbeitenden Industrie eingesetzt. Beispielsweise im Bereich der Ummantelung, etwa für Wandanschlußleisten, in der Flächenkaschierung, etwa für Möbelflächen, Dielen, Tische usw., oder in der Schmalflächenbeschichtung bzw. Kantenverklebung, etwa für Geradkanten, Softforming oder Postforming bei Tischplatten, Möbeltüren oder dergleichen. Dazu wird zunächst das Furnier selbst hergestellt, beispielsweise durch Abschälen von einem Massivholzstück. Diese großflächigen Furnierplatten werden dann entweder zwischengelagert, beispielsweise zu einer Furnierrolle aufgewickelt, oder umgehend weiterverarbeitet. Bei der Weiterverarbeitung der Furniere zur Herstellung von furnierten Teilen wird das Furnier auf den Holz- oder Holzwerkstoffträger aufgeklebt und anschließend das Halbfertigteil geschliffen und lackiert oder direkt lackiert. Der Lackiervorgang ist aufwendig, da nicht nur gerade Flächen, sondern auch Profilgeometrien des furnierummantelten Profils lackiert werden müssen. Die Profile können dabei im Softforming-Verfahren auf einer Kantenanleimmaschine, im Postforming-Verfahren oder auf andere Weise mit dem Furnier beklebt sein. Die beim Lackieren eingesetzten Lacke müssen in der Regel mehrschichtig aufgetragen werden, was eine aufwendige Verfahrenstechnologie und entsprechenden Platzbedarf erfordert.

Ein weitverbreitetes Lacksystem sind UV-härtende Lacke, die meist per Walzenauftrag, seltener im Sprühauftrag auf die Teile aufgetragen werden. Der anschließende Aushärtevorgang erfolgt mit UV-Licht bzw. UV-Lampen. Der maschinelle Aufwand bei der Lackierung mit UV-Lacken ist sehr hoch und erfordert einen sehr großen Raumbedarf. Der große Raumbedarf liegt auch darin begründet, daß Lackiervorgänge mit UV-härtenden Systemen meist mehrere Aufträge - in der Praxis sind drei bis vier Aufträge gängig - erfordern. Mit jedem Lackauftrag können aufgrund der Viskosität, speziell aber aufgrund der UV-Durchhärtung nur ca. 10 bis 20 my Schichten appliziert werden, weshalb auch mehrere Lackaufträge notwendig sind. UV-Lampen und die notwendige Energie zur Aushärtung sind sehr teuer.

EP 0 699 545 beschreibt ein Verfahren zur Herstellung eines hochglanzbeschichteten Furniers, wonach auf einem Echtholzfurnier ein UV-härtenden Lack und darüber eine 2-Komponenten- Polyurethanmasse aufgebracht wird.

Auch andere Lacksysteme, wie z.B. 2-K-PUR-Lacke, Nitrolacke oder Wasserlacke müssen ebenfalls in mehreren Schichten aufgetragen werden. Füller, Grundierungen und gegebenenfalls Zwischenschliffe sind auch hier immer notwendig und machen die Oberflächenbeschichtung komplex und maschinell sehr aufwendig und teuer.

Aufgabe der vorliegenden Erfindung ist es, den Stand der Technik vorteilhaft weiterzubilden.

Gelöst wird diese Aufgabe mit den Merkmalen der unabhängigen Ansprüche.

Bei einem Verfahren zur Herstellung von ein- oder mehrlagigem Furnier, wird vorgeschlagen, daß auf die Oberfläche des zunächst in an sich bekannter Weise hergestellten Furniers vor der Weiterverarbeitung zu furnierten Teilen eine Versiegelungsschicht aufgebracht wird. Die in an sich bekannter Weise hergestellten Furniere liegen als Blatt oder Rollen vor. Durch das Aufbringen einer Versiegelungsschicht auf diese großflächigen Furniere wird das Furnier in seiner Oberfläche, die der späteren Sichtseite entspricht, endgültig veredelt, bevor das Furnier verklebt, ummantelt, kaschiert oder dergleichen wird. Dadurch ist lediglich eine flächige Beschichtung bzw. Veredelung der Furnieroberfläche notwendig, was eine wesentliche Vereinfachung darstellt. Man erhält also gewissermaßen ein großflächiges "Fertigfurnier", das bei der späteren Verarbeitung zu furnierten Teilen, die entweder nach einer Zwischenlagerung auf einer Furnierrolle oder unmittelbar anschließend erfolgen kann, nur noch mit dem Holz- oder Holzwerkstoffträger verklebt wird, ohne daß eine durch Profilgeometrien aufwendige Oberflächenveredelung des furnierten Teils erforderlich ist.

In einer vorteilhaften Ausgestaltung des erfindungsgemäßen Herstellungsverfahrens für Furnier wird die Versiegelungsschicht als eine wasser- und lösungsmittelfreie, mit der Luftfeuchtigkeit aushärtende Reaktiv-Schmelzmasse-Schicht auf Polyurethanbasis aufgebracht. Die wasser- und lösungsmittelfreie Reaktiv-Schmelzmasse-Schicht wird auf die zu versiegelnde Fläche bei einer Temperatur oberhalb von 100 °C, etwa 100 °C bis 140 °C aufgebracht. Dabei werden pro Quadratmeter zu beschichtender Oberfläche etwa 50 bis 100 g Reaktiv-Schmelzmasse aufgetragen. Die Reaktiv-Schmelzmasse besitzt üblicherweise eine Dichte von ca. 1,1 g/m² und ein Viskosität nach Brookfield bei 120 °C von ca. 4.000 mPas. Es sind jedoch auch wesentlich höhere Viskositäten der Reaktiv-Schmelzmasse-Schicht bis zu etwa 30.000 mPas denkbar. Günstig ist es, die Reaktiv-Schmelzmasse-Schicht unter Luftabschluß und Abschirmung von Luftfeuchtigkeit aufzubringen, um ein vorzeitiges Ausreagieren zu verhindern. Die Schicht kann beispielsweise aufgerakelt, ausgewalzt, aufgesprüht oder mittels einer Düse oder Schlitzdüse aufgebracht werden. Selbst im ausgehärteten Zustand als 100-%-iger Festkörper weist die Reaktiv-Schmelzmasse-Schicht noch eine gewisse Restelastizität auf. Eine Reaktiv-Schmelzmasse-Schicht hat sich gerade für die Beschichtung von Furnier als vorteilhaft erwiesen, weil sie in einem einzigen Auftrag auf die Oberfläche des Furniers aufgetragen werden kann. Die verbleibende Restelastizität der Versiegelungsschicht ermöglicht die späteren Verklebungsprozesse auch um Profilgeometrien. Dabei bewirkt die Versiegelungsschicht eine zusätzliche Stabilisierung der Furnieroberfläche, die Risse in der Oberfläche verhindert. Dadurch ist es je nach späterer Anwendung des Furniers (Flächenkaschierung, Kantenverklebung, Profilummantelung) auch möglich, auf das üblicherweise auf der Rückseite des Furniers vor der Weiterverarbeitung zu furnierten Teilen aufgeklebte Vlies zu verzichten, d.h. dem Verarbeiter entfallen dann neben den Materialkosten für Vlies und Kleber zum Verkleben des Vlieses ein ganzer Verarbeitungsschritt. Vor allem bei einfachen Profilgeometrien und Flächenkaschierungen ist der Vliesverzicht vorteilhaft möglich. Über diese Vorteile hinaus weist die Reaktiv-Schmelzmasse-Schicht eine hohe UV-Stabilität, eine hohe Härte, Kratzfestigkeit und eine sehr hohe Stoßfestigkeit auf. Die Verarbeitung der Reaktiv-Schmelzmasse-Schicht erfordert im Vergleich zu herkömmlichen Lackieranlagen nur geringe Maschineninvestitionen und geringen Platz. Die Beschichtung mit Reaktiv-Schmelzmasse stellt eine einfache Heiß-Kalt-Reaktion mit anschließendem Vernetzungsprozeß mit Hilfe von Feuchtigkeit aus der Luft oder dem Material dar, ohne daß eine UV- oder Elektronenstrahl-Härtung oder dergleichen notwendig wäre.

Eine Verbesserung der Oberflächeneigenschaften der Reaktiv-Schmelzmasse-Schicht kann dadurch erzielt werden, daß nach dem Aufbringen auf die Oberfläche des Furniers die Reaktiv-Schmelzmasse-Schicht geglättet wird. Dadurch werden Unebenheiten der Oberfläche vermieden, die sich durch den bloßen Auftrag der heißen Reaktiv-Schmelzmasse ergeben können und es ergibt sich eine noch glattere Oberfläche. Es ist dann auch möglich, mit geringeren Materialmengen zwischen 50 und 100 g/m² an Reaktiv-Schmelzmasse zu arbeiten.

Vorteilhaft ist es, der Oberfläche der Reaktiv-Schmelzmasse-Schicht zwischen dem Aufbringen und dem Glätten noch einmal Wärme zuzuführen, um das Ergebnis der Glättung weiter zu verbessern. Günstigerweise erfolgt das Glätten mittels einer Walze, beispielsweise einer Stahlwalze, die gegebenenfalls mit einer Polyurethan-Beschichtung versehen sein kann.

Besonders vorteilhaft ist es, wenn die Walze während des Glättens mit einem Trennmittel benetzt wird. Auf diese Weise wird es wirksam verhindert, daß die noch nicht ausgehärtete Reaktiv-Schmelzmasse-Schicht auf dem zu versiegelnden Teil abreißt und an der Walze anklebt. Vorzugsweise wird das Trennmittel als lösemittelfreies und niedrigviskoses Mittel auf Paraffinwachs-Basis aufgebracht. Ein solches Mittel verhindert zum einen das Ankleben der Reaktiv-Schmelzmasse-Schicht an der Walze und darüber hinaus wird die Oberfläche der Reaktiv-Schmelzmasse-Schicht wesentlich glatter und sofort blockfrei. Das Trennmittel auf Paraffinwachs-Basis ist klar und besitzt beispielsweise eine Dichte von ca. 0,85 g/cm³ sowie eine Viskosität bei 20 °C nach Brookfield von ca. 34 mPas. Ein Viskositätsbereich zwischen 30 und 500 mPas ist denkbar. Die Auftragsmenge beträgt ca. 20 bis 35 g/m².

Das Trennmittel wird beispielsweise im Sprühverfahren oder Vakuum-Sprühverfahren auf die Walze aufgebracht. Bevorzugt ist es jedoch, das Trennmittel mittels eines getränkten Filzes auf die Walze aufzubringen, was eine besonders einfache und sichere Möglichkeit zur Schaffung eines gleichmäßigen, dünnen Trennmittelfilms während des Glättens der Reaktiv-Schmelzmasse-Schicht darstellt.

Eine Vorrichtung zur Herstellung von Furnier mit einer Versiegelungsschicht auf ihrer Oberfläche enthält eine an sich bekannte Furnierherstelleinrichtung, eine Auftragsstation, eine Transporteinrichtung und eine Glättstation. Dabei ist es günstig, wenn zwischen der Auftragsstation und der Glättstation eine Wärmeeinrichtung angeordnet ist.

In einer bevorzugten Ausführungsform der Vorrichtung enthält die Glättstation mindestens eine Walze, die besonders bevorzugt eine Stahlwalze ist und je nach Anwendungssituation eine Polyurethan-Beschichtung aufweist. Außerdem ist es vorteilhaft, wenn die Walze mit einem Trennmittel benetzbar ist. Dieses Trennmittel ist etwa ein oben beschriebenes Mittel auf Paraffinwachs-Basis. Zur Benetzung der Walze mit dem Trennmittel kann beispielsweise eine Sprüheinrichtung, eine Vakuum-Sprüheinrichtung oder ein getränkter Filz vorgesehen sein.

Bei einem Verfahren zur Herstellung eines furnierten Teiles wird auf einen Holz- oder Holzwerkstoffträger ein erfindungsgemäßes ein- oder mehrlagiges Furnier aufgeklebt. Wie schon erläutert, ist es dadurch je nach Anwendungssituation möglich, auf das Aufkleben eines Vlieses auf der Rückseite des Furniers vor der Weiterverarbeitung zu verzichten, ohne daß Risse in der Furnieroberfläche beim Beschichten von Profilgeometrien zu befürchten sind. Außerdem muß keine Veredelung der Oberfläche des furnierten Teils durch Schleifen und Lackieren mehr erfolgen.

In der Zeichnung ist die Erfindung anhand eines Ausführungsbeispiels erläutert. Es zeigen:
- Fig.1: einen schematischen Ausschnitt eines erfindungsgemäßen Furniers mit einer Versiegelungsschicht auf der Oberfläche,
- Fig. 2: eine Vorrichtung zur Herstellung eines Furniers mit einer Versiegelungsschicht auf der Oberfläche,
- Fig. 3: einen gegenüber der Fig. 1 vergrößert dargestellten Ausschnitt eines furnierten Teils und
- Fig. 4: eine andere Vorrichtung zur Beschichtung von Furnierrollen.

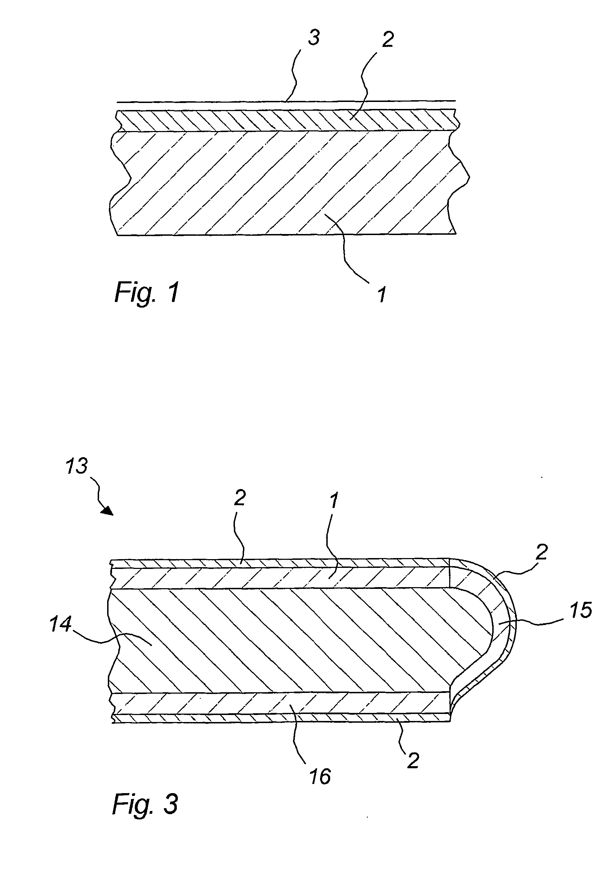

In Fig. 1 ist ein Ausschnitt eines Furniers 1 dargestellt. Auf der Oberseite des Furniers 1 ist eine Versiegelungsschicht 2 aus einer wasser- und lösungsmittelfreien, mit der Luftfeuchtigkeit aushärtende Reaktiv-Schmelzmasse-Schicht auf Polyurethanbasis aufgebracht, die bei der Herstellung mittels einer mit einem Trennmittel auf Paraffinbasis benetzten Walze nach dem Aufbringen geglättet worden ist. Dieser Glättungsvorgang ergibt eine besonders glatte Oberfläche der Versiegelungsschicht, die durch den weiteren Strich 3 angedeutet ist.

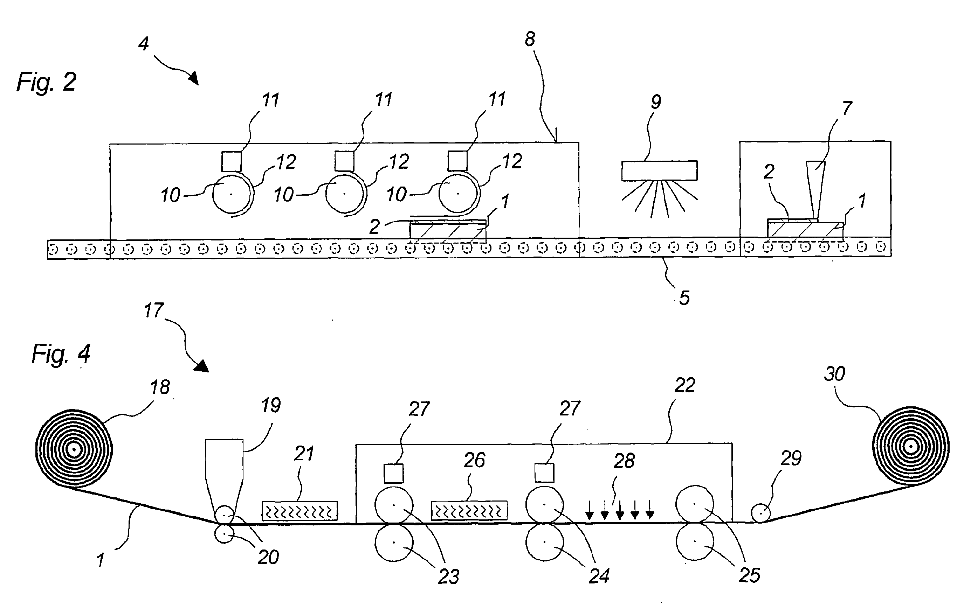

Die Fig. 2 zeigt eine schematisch dargestellte Fertigungsstraße 4 zur kontinuierlichen Herstellung des erfindungsgemäßen Furniers 1. Die Fertigungsstraße 4 enthält eine nicht dargestellte und an sich bekannte Furnierherstelleinrichtung, in der das Furnier beispielsweise durch Abschälen von einem Massivholzstück hergestellt wird. Es wäre aber auch möglich, der Fertigungsstraße 4 herkömmliche Furniere ohne Oberflächenbeschichtung, die etwa zu einer Furnierrolle aufgerollt sind, für eine Oberflächenbeschichtung zuzuführen. Eine Transporteinrichtung 5 für die zu beschichtenden Furniere transportiert das Furnier 1 zunächst von der Furnierherstelleinrichtung in eine Auftragsstation 6. In der Auftragsstation 6 wird die Reaktiv-Schmelzmasse-Schicht unter Luftabschluß und Abschirmung von Luftfeuchtigkeit auf mindestens 100 °C erhitzt und anschließend von einer nicht dargestellten Pumpvorrichtung in einen beheizten Schlauch gepumpt, durch den Schlauch zu einer Auftragseinrichtung, beispielsweise einer Schlitzdüse 7 geleitet und von der Schlitzdüse auf das Furnier 1 aufgebracht.

Bei der Reaktiv-Schmelzmasse-Schicht handelt es sich um eine wasser- und lösungsmittelfreie, mit der Luftfeuchtigkeit aushärtende Reaktiv-Schmelzmasse-Schicht auf Polyurethanbasis, die auf die zu versiegelnde Fläche bei einer Temperatur oberhalb von 100 °C, etwa 100 °C bis 140 °C aufgebracht. Dabei werden pro Quadratmeter zu beschichtender Oberfläche etwa 50 bis 100 g Reaktiv-Schmelzmasse aufgetragen. Die Reaktiv-Schmelzmasse besitzt üblicherweise eine Dichte von ca. 1,1 g/m² und ein Viskosität nach Brookfield bei 120 °C von ca. 4.000 mPas, wobei auch eine höhere Viskosität bis zu 30.000 mPas denkbar ist. Günstig ist es, die Reaktiv-Schmelzmasse-Schicht unter Luftabschluß und Abschirmung von Luftfeuchtigkeit aufzubringen, um ein vorzeitiges Ausreagieren zu verhindern. Die Schicht kann beispielsweise aufgerakelt, ausgewalzt, aufgesprüht oder mittels einer Düse oder Schlitzdüse aufgebracht werden.

Das mit der Reaktiv-Schmelzmasse beschichtete Furnier 1 wird von der Auftragsstation zur Fixier- und Glättstation 8 weitertransportiert. Zwischen dem Aufbringen der Reaktiv-Schmelzmasse-Schicht 2 und der Fixierstation 8 wird der Oberfläche der Reaktiv-Schmelzmasse-Schicht über eine angedeutete Wärmeeinrichtung 9 Wärme zugeführt, um die Reaktiv-Schmelzmasse-Schicht zumindest zähflüssig zu halten.

In der Fixier- und Glättstation 8 sind drei Walzen 10 drehbar und gegebenenfalls höhenverstellbar gelagert. Die Walzen sind mit einer Polyurethan-Beschichtung versehen. Oberhalb jeder der Walzen 10 stehen diese in Kontakt mit einem Filz 11, der mit einem Trennmittel 12 auf Paraffinwachs-Basis getränkt ist. Durch die Drehung der Walzen gibt der Filz eine gleichmäßige geringe Menge des Trennmittels als eine dünne Schicht auf die Oberfläche der Walzen 10 ab, die diese beim Kontakt mit der Oberfläche der Reaktiv-Schmelzmasse-Schicht 2 weitergeben. Durch das Trennmittel wird die Oberfläche der Reaktiv-Schmelzmasse-Schicht 2 sofort blockfrei und der Glättvorgang unterstützt.

Die beschichteten und geglätteten Furniere werden aus der Fixier- und Glättstation 8 von der Transporteinrichtung 5 weitertransportiert und üblicherweise zur Vernetzung der Reaktiven-Schmelzmasse-Schicht 2 ca. drei bis vier Tage zwischengelagert. Nach der vollständigen Vernetzung bildet die Reaktiv-Schmelzmasse-Schicht 2 eine mit dem Furnier 1 fest verbundene Versiegelungsschicht auf der Oberfläche, die einen 100-%-igen Festkörper darstellt und deren Dicke während des Auftrags je nach Anforderungen zwischen 5 und 150 my eingestellt werden kann. Eine Weiterverarbeitung des Furniers 1 ist dann zur Herstellung von beliebigen furnierten Teilen möglich.

In Fig. 3 ist ein furniertes Teil 13 dargestellt. Auf einen Holz- oder Holzwerkstoffträger 14 sind Furniere 1, 15, 16 aufgeklebt. Auf der Oberfläche der Furniere 1, 15, 16 ist auf der Sichtseite eine Versiegelungsschicht 2 als eine wasser- und lösungsmittelfreie, mit der Luftfeuchtigkeit vernetzende Reaktiv-Schmelzmasse-Schicht auf Polyurethanbasis aufgebracht, wie diese genauer bei Fig. 1 erläutert ist. Das Furnier 15 ist beispielsweise durch ein Softforming-Verfahren auf einer nicht dargestellten Kantenanleimmaschine aufgeklebt worden. Die in der ausreagierten Reaktiv-Schmelzmasse-Schicht enthaltene Restelastizität hält dabei die Oberfläche des Furniers 1 zusammen, so daß Risse oder Spalten im Furnier 1 vermieden werden. Auf ein auf der Rückseite des Furniers 1 aufgeklebtes Vlies kann daher verzichtet werden.

Grundsätzlich kann das mit einer Versiegelungsschicht 2 versehene Furnier 1 auf beliebige Weise aufgeklebt werden. Es besteht dabei die Möglichkeit, das mit einer Versiegelungsschicht 2 versehene Furnier 1 nach der Beschichtung der Oberfläche des Furniers 1 auf einer separaten Anlage zunächst wieder zu einer Furnierrolle aufzuwickeln und zu einem späteren Zeitpunkt weiterzuverarbeiten. Daneben ist auch eine Weiterverarbeitung unmittelbar nach der Beschichtung im Durchlauf beispielsweise auf einer Ummantelungsanlage, einer Kantenanleimmaschine, einer Postforminganlage oder einer Flächenkaschieranlage denkbar.

Eine Vorrichtung 17 zur Beschichtung von Furnierrollen ist in Fig. 4 schematisch dargestellt. Das unbeschichtete Furnier 1 wird von einer Vorratsrolle 18 abgezogen und einer Auftragseinheit 19 zugeführt, in der über Walzen 20 eine wasser- und lösungsmittelfreie, mit der Luftfeuchtigkeit aushärtende Reaktiv-Schmelzmasse-Schicht auf Polyurethanbasis aufgebracht wird. An einer Wärmequelle 21 vorbei wird das Furnier der in einem Gehäuse 22 angeordneten Fixier- und Glättstation zugeführt.

In dem Gehäuse befinden sich Andruck- und Glättwalzen-Paare 23, 24, 25, über die die aufgebrachte Reaktiv-Schmelzmasse-Schicht auf dem Furnier angedrückt und geglättet wird. Die Walzenpaare 23, 24, zwischen denen eine weitere Wärmequelle 26 angeordnet ist, werden während des Andruck- und Glättvorgangs jeweils über einen Filz 27 mit einem bereits oben näher beschriebenen Trennmittel auf Paraffinwachs-Basis benetzt. Durch die bereits beschriebene Wirkung des Trennmittels ist die auf dem Furnier aufgebrachte Reaktiv-Schmelzmasse-Schicht sofort blockfrei, so daß ein miteinander Verkleben des wieder aufgerollten Furniers ausgeschlossen ist. Zusätzlich ist zwischen den Walzenpaaren 24 und 25 eine durch Pfeile angedeutete Kühlzone 28 angeordnet. Nach Verlassen des Gehäuses 22 der Fixier- und Glättstation wird das beschichtete Furnier über eine Umlenkwalze 29 wieder zu einer Furnierrolle 30 aufgewickelt. Die Reaktiv-Schmelzmasse-Schicht des aufgerollten Furniers hat dann die Möglichkeit vollständig chemisch zu vernetzen.

Mit der beschriebenen Vorrichtung ist es möglich, unbeschichtete Furnierrollen in einem automatischen und kontinuierlichen Verfahren zu beschichten und wieder aufzurollen.

## Patentansprüche

1. Verfahren zur Herstellung von ein- oder mehrlagigem Furnier, das in an sich bekannter Weise hergestellt wird, **dadurch gekennzeichnet, dass** unmittelbar auf die Oberfläche des Furniers vor der Weiterverarbeitung eine Versiegelungsschicht als eine wasser- und lösungsmittelfreie, mit der Luftfeuchtigkeit aushärtende Reaktiv-Schmelzmasse-Schicht auf Polyurethanbasis aufgebracht wird.

2. Verfahren nach Anspruch 1, **dadurch gekennzeichnet, dass** die Reaktiv-Schmelzmasse-Schicht nach dem Aufbringen geglättet wird.

3. Verfahren nach Anspruch 2, **dadurch gekennzeichnet, dass** zwischen dem Aufbringen und dem Glätten der Oberfläche der Reaktiv-Schmelzmasse-Schicht Wärme zugeführt wird.

4. Verfahren nach Anspruch 2 oder 3, **dadurch gekennzeichnet, dass** das Glätten der Reaktiv-Schmelzmasse-Schicht mittels mindestens einer Walze erfolgt.

5. Verfahren nach Anspruch 4, **dadurch gekennzeichnet, dass** eine Stahlwalze verwendet wird.

6. Verfahren nach Anspruch 4 oder 5, **dadurch gekennzeichnet, dass** die Walze eine Polyurethan-Beschichtung aufweist.

7. Verfahren nach einem der Ansprüche 4 bis 6, **dadurch gekennzeichnet, dass** die Walze während des Glättens mit einem Trennmittel benetzt wird.

8. Verfahren nach Anspruch 7, **dadurch gekennzeichnet, dass** das Trennmittel als lösemittelfreies und niedrigviskoses Mittel auf Paraffinwachs-Basis aufgebracht wird.

9. Verfahren nach Anspruch 7 oder 8, **dadurch gekennzeichnet, dass** das Trennmittel im Sprühverfahren auf die Walze aufgebracht wird.

10. Verfahren nach Anspruch 7 oder 8, **dadurch gekennzeichnet, dass** das Trennmittel im Vakuum-Sprühverfahren aufgebracht wird.

11. Verfahren nach Anspruch 7 oder 8, **dadurch gekennzeichnet, dass** das Trennmittel mittels eines getränkten Filzes auf die Walze aufgebracht wird.

12. Ein- oder mehrlagiges Furnier, das in an sich bekannter Weise hergestellt ist, **dadurch gekennzeichnet, dass** unmittelbar auf die Oberfläche des Furniers (1) eine Versiegelungsschicht (2) aufgebracht ist, die als eine wasser- und lösungsmittelfreie, mit der Luftfeuchtigkeit aushärtende Reaktiv-Schmelzmasse-Schicht auf Polyurethanbasis ausgebildet ist, und die, selbst im ausgehärteten Zustand, noch eine gewisse Restelastizität aufweist.

13. Furnier nach Anspruch 12, **dadurch gekennzeichnet, dass** die auf der Oberfläche aufgebrachte Reaktiv-Schmelzmasse-Schicht (2) geglättet ist.

14. Furnier nach Anspruch 13, **dadurch gekennzeichnet, dass** die Reaktiv-Schmelzmasse-Schicht (2) mittels mindestens einer Walze (10) geglättet ist.

15. Furnier nach Anspruch 14, **dadurch gekennzeichnet, dass** die Reaktiv-Schmelzmasse-Schicht (10) mittels einer Stahlwalze geglättet ist.

16. Furnier nach Anspruch 14 oder 15, **dadurch gekennzeichnet, dass** die Walze 10) eine Polyurethan-Beschichtung aufweist.

17. Furnier nach einem der Ansprüche 14 bis 16, **dadurch gekennzeichnet, dass** die Reaktiv-Schmelzmasse-Schicht (10) mittels einer mit einem Trennmittel (12) benetzten Walze (10) geglättet ist.

18. Furnier nach Anspruch 17, **dadurch gekennzeichnet, dass** das Trennmittel (12) ein lösemittelfreies und niedrigviskoses Mittel auf Paraffinwachs-Basis ist.

19. Verfahren zur Herstellung eines furnierten Teiles, bei dem auf einen Holz- oder Holzwerkstoffträger ein ein- oder mehrlagiges Furnier mit einer auf der Oberfläche des Furniers aufgebrachten Versiegelungsschicht nach einem der Ansprüche 17 oder 18 aufgeklebt wird.

20. Furniertes Teil mit einem Holz- oder Holzwerkstoffträger, auf den ein Furnier aufgeklebt ist, **dadurch gekennzeichnet, dass** das Furnier nach einem der Ansprüche 12 bis 18 ausgebildet ist.

21. Vorrichtung zur Herstellung von Furnier mit einer Versiegelungsschicht unmittelbar auf seiner Oberfläche, die als eine wasser- und lösungsmittelfreie, mit der Luftfeuchtigkeit aushärtende Reaktiv-Schmelzmasse-Schicht auf Polyurethanbasis ausgebildet ist, wobei die Vorrichtung eine an sich bekannte Furnierherstelleinrichtung, eine Auftragsstation (6), eine Transporteinrichtung (5) und eine Glättstation (8) enthält.

22. Vorrichtung nach Anspruch 21, **dadurch gekennzeichnet, dass** zwischen der Auftragsstation (6) und der Glättstation (8) eine Wärmeeinrichtung (9) angeordnet ist.

23. Vorrichtung nach Anspruch 21 oder 22, **dadurch gekennzeichnet, dass** die Glättstation (8) mindestens eine Walze (10) enthält.

24. Vorrichtung nach Anspruch 23, **dadurch gekennzeichnet, dass** die Walze (10) eine Stahlwalze ist.

25. Vorrichtung nach Anspruch 23 oder 24, **dadurch gekennzeichnet, dass** die Walze (10) eine Polyurethan-Beschichtung aufweist.

26. Vorrichtung nach einem der Ansprüche 23 bis 25, **dadurch gekennzeichnet, dass** die Walze (10) mit einem Trennmittel (12) benetzbar ist.

27. Vorrichtung nach Anspruch 26, **dadurch gekennzeichnet, dass** zur Benetzung der Walze (10) mit dem Trennmittel (12) eine Sprüheinrichtung vorgesehen ist.

28. Vorrichtung nach Anspruch 26, **dadurch gekennzeichnet, dass** zur Benetzung der Walze (10) mit dem Trennmittel (12) eine Vakuum-Sprüheinrichtung vorgesehen ist.

29. Vorrichtung nach Anspruch 26, **dadurch gekennzeichnet, dass** zur Benetzung der Walze (10) mit dem Trennmittel (12) ein getränkter Filz (11) vorgesehen ist.

## Claims

1. Method for producing single- or multi-ply veneer which is produced in a conventional manner, **characterized in that** the surface of the veneer has directly applied to it, prior to further processing, a sealing layer as a water- and solvent-free, atmospheric humidity curing reactive hot-melt layer based on polyurethane.

2. Method according to Claim 1, **characterized in that** the reactive hot-melt layer is smoothed after the applying.

3. Method according to Claim 2, **characterized in that** heat is supplied to the surface of the reactive hot-melt layer between the applying and the smoothing.

4. Method according to Claim 2 or 3, **characterized in that** the smoothing of the reactive hot-melt layer is effected by means of at least one roll.

5. Method according to Claim 4, **characterized in that** a steel roll is used.

6. Method according to Claim 4 or 5, **characterized in that** the roll has a polyurethane coating.

7. Method according to any one of Claims 4 to 6, **characterized in that** the roll is wetted with a release agent during the smoothing.

8. Method according to Claim 7, **characterized in that** the release agent is applied as a solvent-free and low-viscosity agent based on paraffin wax.

9. Method according to Claim 7 or 8, **characterized in that** the release agent is applied to the roll by spraying.

10. Method according to Claim 7 or 8, **characterized in that** the release agent is applied to the roll by vacuum spraying.

11. Method according to Claim 7 or 8, **characterized in that** the release agent is applied to the roll by means of a saturated felt.

12. Single- or multi-ply veneer produced in a manner known per se, **characterized in that** the surface of the veneer (1) has had directly applied to it a sealing layer (2) which is configured as a water- and solvent-free, atmospheric humidity curing reactive hot-melt layer based on polyurethane and which, even in the cured state, still retains a certain elasticity.

13. Veneer according to Claim 12, **characterized in that** the reactive hot-melt layer (2) applied to the surface is smoothed.

14. Veneer according to Claim 13, **characterized in that** the reactive hot-melt layer (2) is smoothed by means of at least one roll (10).

15. Veneer according to Claim 14, **characterized in that** the reactive hot-melt layer (10) is smoothed by means of a steel roll.

16. Veneer according to Claim 14 or 15, **characterized in that** the roll (10) has a polyurethane coating.

17. Veneer according to any one of Claims 14 to 16, **characterized in that** the reactive hot-melt layer (10) is smoothed by means of a roll (10) wetted with a release agent (12).

18. Veneer according to Claim 17, **characterized in that** the release agent (12) is a solvent-free and low-viscosity agent based on paraffin wax.

19. Method for producing a veneered part wherein a single- or multi-ply veneer having a sealing layer applied to its surface and according to either of Claims 17 and 18 is adhered to a wood or woodbase support.

20. Veneered part comprising a wood or woodbase support to which a veneer is adhered, **characterized in that** the veneer is configured according to any one of Claims 12 to 18.

21. Apparatus for producing veneer having directly on its surface a sealing layer configured as a water- and solvent-free, atmospheric humidity curing reactive hot-melt layer based on polyurethane, the apparatus comprising a veneer-producing appliance known per se, an applying station (6), a transporting appliance (5) and a smoothing station (8).

22. Apparatus according to Claim 21, **characterized in that** a heating appliance (9) is disposed between the applying station (6) and the smoothing station (8).

23. Apparatus according to Claim 21 or 22, **characterized in that** the smoothing station (8) comprises at least one roll (10).

24. Apparatus according to Claim 23, **characterized in that** the roll (10) is a steel roll.

25. Apparatus according to Claim 23 or 24, **characterized in that** the roll (10) has a polyurethane coating.

26. Apparatus according to any one of Claims 23 to 25, **characterized in that** the roll (10) is wettable with a release agent (12).

27. Apparatus according to Claim 26, **characterized in that** a spraying appliance is provided for wetting the roll (10) with the release agent (12).

28. Apparatus according to Claim 26, **characterized in that** a vacuum spraying appliance is provided for wetting the roll (10) with the release agent (12).

29. Apparatus according to Claim 26, **characterized in that** a saturated felt (11) is provided for wetting the roll (10) with the release agent (12).

## Revendications

1. Procédé pour fabriquer un contreplaqué à une ou plusieurs couches, qui est fabriqué de manière connue en soi, **caractérisé en ce que** l'on applique directement sur la surface du contreplaqué, avant transformation, une couche de vitrification sous la forme d'une couche de masse fondue réactive, exempte d'eau et de solvant, durcissant à l'humidité de l'air, à base de polyuréthanne.

2. Procédé selon la revendication 1, **caractérisé en ce que** la couche de masse fondue réactive est lissée après application.

3. Procédé selon la revendication 2, **caractérisé en ce que** l'on applique de la chaleur entre l'application et le lissage de surface de la couche de masse fondue réactive.

4. Procédé selon la revendication 2 ou 3, **caractérisé en ce qu'**on effectue le lissage de la couche de masse fondue réactive au moyen d'un cylindre.

5. Procédé selon la revendication 4, **caractérisé en ce qu'**on utilise un cylindre en acier.

6. Procédé selon la revendication 4 ou 5, **caractérisé en ce que** le cylindre présente un revêtement en polyuréthanne.

7. Procédé selon l'une quelconque des revendications 4 à 6, **caractérisé en ce que** le cylindre est mouillé avec un agent séparateur pendant le lissage.

8. Procédé selon la revendication 7, **caractérisé en ce que** l'on applique l'agent séparateur sous la forme d' un agent sans solvant et de faible viscosité à base de cire de paraffine.

9. Procédé selon la revendication 7 ou 8, **caractérisé en ce que** l'agent séparateur est appliqué sur le cylindre par pulvérisation.

10. Procédé selon la revendication 7 ou 8, **caractérisé en ce que** l'on applique l'agent séparateur par pulvérisation sous vide.

11. Procédé selon la revendication 7 ou 8, **caractérisé en que** l'agent séparateur est appliqué sur le cylindre au moyen d'un feutre imprégné.

12. Contreplaqué à une ou plusieurs couches, qui est fabriqué de manière connue en soi, **caractérisé en ce que** l'on applique directement sur la surface du contreplaqué (1) une couche de vitrification (2), qui se présente sous la forme d'une couche de masse fondue réactive, exempte d'eau et de solvant, durcissant à l'humidité de l'air, à base de polyuréthanne, et qui, même à l'état durci, présente encore une certaine élasticité résiduelle.

13. Contreplaqué selon la revendication 12, **caractérisé en ce que** la couche de masse fondue réactive (2) appliquée à la surface est lissée.

14. Contreplaqué selon la revendication 13, **caractérisé en ce que** la couche de masse fondue réactive (2) est lissée par au moins un cylindre (10).

15. Contreplaqué selon la revendication 14, **caractérisé en ce que** la couche de masse fondue réactive (10) est lissée par un cylindre en acier.

16. Contreplaqué selon la revendication 14 ou 15, **caractérisé en ce que** le cylindre (10) présente un revêtement en polyuréthanne.

17. Contreplaqué selon l'une quelconque des revendications 14 à 16, **caractérisé en ce que** la couche de masse fondue réactive (2) est lissée par un cylindre (10) mouillé avec un agent séparateur (12).

18. Contreplaqué selon la revendication 17, **caractérisé en ce que** l'agent séparateur (12) est un agent sans solvant et de faible viscosité à base de cire de paraffine.

19. Procédé pour fabriquer une pièce de contreplaqué, dans lequel on colle sur un support en bois ou en matériau dérivé du bois un contreplaqué à une ou plusieurs couches pourvu d'une couche de vitrification appliquée sur la surface du contreplaqué selon l'une quelconque des revendications 17 ou 18.

20. Pièce de contreplaqué avec un support en bois ou en matériau dérivé du bois, sur lequel on colle un contreplaqué, **caractérisée en ce que** le contreplaqué est formé selon l'une quelconque des revendications 12 à 18.

21. Dispositif pour fabriquer un contreplaqué avec une couche de vitrification appliquée directement sur sa surface, qui se présente sous la forme d'une couche de masse fondue réactive exempte d'eau et de solvant et durcissant à l'humidité de l'air, à base de polyuréthanne, le dispositif comprenant un dispositif de fabrication de contreplaqué connu en soi, un poste d'application (6), un dispositif de transport (5) et un poste de lissage (8).

22. Dispositif selon la revendication 21, **caractérisé en ce que** l'on agence entre le poste d'application (6) et le poste de lissage (8) un dispositif de production de chaleur (9).

23. Dispositif selon la revendication 21 ou 22, **caractérisé en ce que** le poste de lissage (8) contient au moins un cylindre (10).

24. Dispositif selon la revendication 23, **caractérisé en ce que** le cylindre (10) est un cylindre en acier.

25. Dispositif selon la revendication 23 ou 24, **caractérisé en ce que** le cylindre (10) présente un revêtement en polyuréthanne.

26. Dispositif selon l'une quelconque des revendications 23 à 25, **caractérisé en ce que** le cylindre (10) peut être mouillé avec un agent séparateur (12).

27. Dispositif selon la revendication 26, **caractérisé en ce que** l'on prévoit un dispositif de pulvérisation pour mouiller le cylindre (10) avec l'agent séparateur (12).

28. Dispositif selon la revendication 26, **caractérisé en ce que** l'on prévoit un dispositif de pulvérisation sous vide pour mouiller le cylindre (10) avec l'agent séparateur (12).

29. Dispositif selon la revendication 26, **caractérisé en ce que** l'on prévoit un feutre imprégné (11) pour mouiller le cylindre (10) avec l'agent séparateur (12).
